(19) Europäisches Patentamt / European Patent Office / Office européen des brevets

(11) **EP 4 495 655 A1**

(12) **EUROPEAN PATENT APPLICATION**
published in accordance with Art. 153(4) EPC

(43) Date of publication:
**22.01.2025 Bulletin 2025/04**

(21) Application number: **23770549.6**

(22) Date of filing: **07.03.2023**

(51) International Patent Classification (IPC):
**G02B 13/00** (2006.01)    **G02B 13/18** (2006.01)

(52) Cooperative Patent Classification (CPC):
**G02B 13/00; G02B 13/18**

(86) International application number:
**PCT/JP2023/008595**

(87) International publication number:
**WO 2023/176593 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2022  JP 2022040406**

(71) Applicant: **Daicel Corporation**
**Osaka-shi, Osaka 530-0011 (JP)**

(72) Inventor: **MATSUNAGA, Shigehiko**
**Tokyo 108-8230 (JP)**

(74) Representative: **Müller-Boré & Partner**
**Patentanwälte PartG mbB**
**Friedenheimer Brücke 21**
**80639 München (DE)**

(54) **IMAGING LENS AND IMAGING DEVICE PROVIDED THEREWITH**

(57)    An imaging lens includes a lens system in which a first lens, a second lens, a third lens, and a fourth lens are arranged in order from an object side. The first lens has negative refractive power, and the lens surface on the object side thereof is a convex surface. The second lens has positive refractive power, and both the lens surface on the object side and the lens surface on an imaging surface side thereof are convex surfaces. The third lens has positive refractive power, and the lens surface on the imaging surface side thereof is a convex surface. The fourth lens has negative refractive power, and the lens surface on the imaging surface side thereof is a concave surface. The lens system satisfies the following conditions. f1/f < -4 . . . (1), 0.8 < f2/f . . . (2), where f is the focal length of the lens system, f1 is the focal length of the first lens, and f2 is the focal length of the second lens.

FIG. 1

EP 4 495 655 A1

## Description

Technical Field

The present disclosure relates to an imaging lens and an imaging device provided therewith.

Background Art

In recent years, as typified by the high performance of an imaging device mounted on a portable communication terminal such as a smartphone, an imaging lens having a smaller size and a higher resolution is desired for an imaging device commonly mounted on an electronic device. For example, Patent Document 1 below discloses a proposal for downsizing and increasing the resolution of a four-lens imaging lens.

Recently, more electronic devices are mounted with a distance measurement sensor such as a time of flight (ToF) sensor. Such a distance measurement sensor measures the distance to a subject by using a time from when light is emitted from a light source to when reflected light reflected by the subject is received by a light receiving element. Such a distance measurement sensor is also a type of imaging device, and causes a light receiving element to receive reflected light through an imaging lens. Also an imaging lens used for a distance measurement sensor is desired to be an imaging lens having a smaller size and a higher resolution. Patent Document 2 below discloses a proposal for exhibiting stable resolution performance for an imaging lens that forms an image with near-infrared light.

Citation List

Patent Document

Patent Document 1: JP 6324824 A

Patent Document 2: JP 6718147 A

Summary of Invention

Technical Problem

In the imaging lens, an unreasonable design results in a large variation in the value of performance of an actually produced lens with respect to the performance design value of the lens, and prevents the performance of the entire lens system in which a plurality of lenses are combined from being fully exhibited. Patent Documents 1 and 2 do not mention this point, and there is room for improvement in realizing an imaging lens that can reduce production variation while being small in size and high in resolution.

Therefore, an object of the present disclosure is to provide an imaging lens that can reduce production variation while having a small size and high resolution, and an imaging device provided therewith.

Solution to Problem

An imaging lens according to one embodiment of the present disclosure includes a lens system in which a first lens, a second lens, a third lens, and a fourth lens are arranged in order from an object side. The first lens has negative refractive power, and a lens surface on an object side of the first lens is a convex surface, the second lens has positive refractive power, and both of a lens surface on an object side and a lens surface on an imaging surface side of the second lens are convex surfaces, the third lens has positive refractive power, and a lens surface on an imaging surface side of the third lens is a convex surface, the fourth lens has negative refractive power, and a lens surface on an imaging surface side of the fourth lens is a concave surface, and the lens system satisfies conditions of:

$$f1/f < -4 \cdots (1)$$

$$0.8 < f2/f \cdots (2)$$

where f is a focal length of the lens system, f1 is a focal length of the first lens, and f2 is a focal length of the second lens.

An imaging device according to another aspect of the present disclosure includes an imaging lens having the above configuration.

Advantageous Effects of Invention

According to the present disclosure, it is possible to provide an imaging lens that can reduce production variation while being small in size and high in resolution, and a distance measurement sensor including the same.

Brief Description of Drawings

FIG. 1 is a view illustrating a schematic configuration of a distance measurement sensor applied with an imaging lens according to one embodiment of the present disclosure.

FIG. 2 is a configuration diagram of an imaging lens in Example 1 of the present disclosure.

FIG. 3 is an aberration diagram of the imaging lens illustrated in FIG. 2.

FIG. 4 is a graph showing a relative light amount with respect to an image height of the imaging lens illustrated in FIG. 2.

FIG. 5 is a configuration diagram of an imaging lens in Example 2 of the present disclosure.

FIG. 6 is an aberration diagram of the imaging lens illustrated in FIG. 5.

FIG. 7 is a graph showing a relative light amount with respect to an image height of the imaging lens illustrated in FIG. 5.

FIG. 8 is a configuration diagram of an imaging lens in Example 3 of the present disclosure.

FIG. 9 is an aberration diagram of the imaging lens illustrated in FIG. 8.

FIG. 10 is a graph showing a relative light amount with respect to an image height of the imaging lens illustrated in FIG. 8.

FIG. 11 is a configuration diagram of an imaging lens in Example 4 of the present disclosure.

FIG. 12 is an aberration diagram of the imaging lens illustrated in FIG. 11.

FIG. 13 is a graph showing a relative light amount with respect to an image height of the imaging lens illustrated in FIG. 11.

FIG. 14 is a configuration diagram of an imaging lens in Example 5 of the present disclosure.

FIG. 15 is an aberration diagram of the imaging lens illustrated in FIG. 14.

FIG. 16 is a graph showing a relative light amount with respect to an image height of the imaging lens illustrated in FIG. 14.

Description of Embodiments

Hereinafter, one embodiment will be described with reference to the drawings. Note that the same or corresponding elements are denoted by the same reference signs throughout all the drawings, and redundant detailed description will be omitted. Hereinafter, an aspect in which an imaging device applied with the imaging lens of the present disclosure constitutes a distance measurement sensor will be exemplified.

Exemplification of Distance Measurement Sensor Applied with Imaging Lens

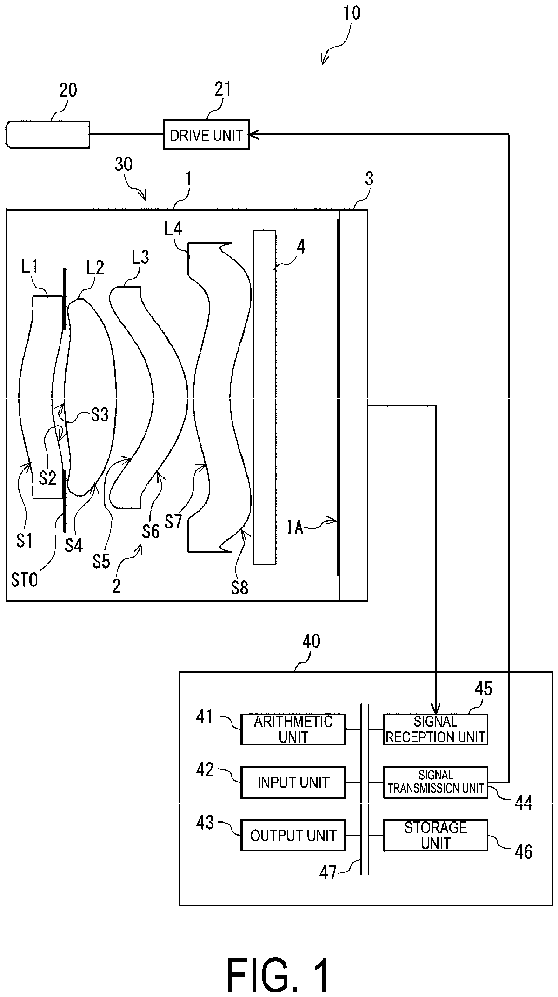

FIG. 1 is a view illustrating a schematic configuration of a distance measurement sensor applied with an imaging lens according to one embodiment of the present disclosure. As illustrated in FIG. 1, a distance measurement sensor 10 includes a light source 20, a light receiver 30, and a controller 40. The light source 20 is a laser diode or a light emitting diode that emits near-infrared light, for example. The wavelength emitted by the light source 20 is set within a range in which, for example, the lower limit value is 700 nm, preferably 800 nm, and the upper limit value is 1100 nm, preferably 1000 nm. The light source 20 is connected to the controller 40 via a drive unit (driver) 21. The drive unit 21 causes the light source 20 to emit light in response to a drive signal from the controller 40.

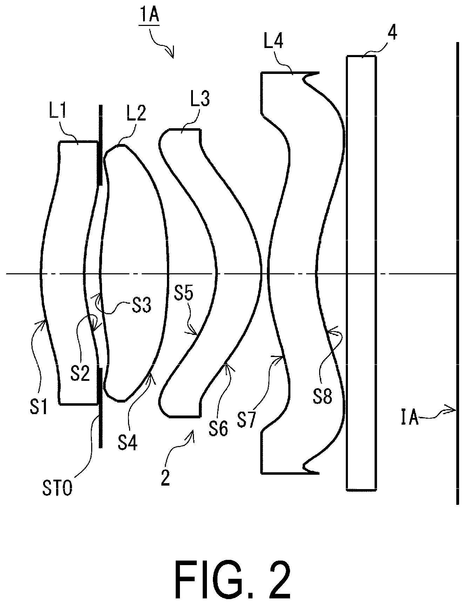

The light receiver 30 includes an imaging lens 1 including a lens system 2 described later, and an imaging element 3 including a plurality of light receiving elements arranged on an imaging surface IA of the imaging lens 1. Note that the imaging lens 1 illustrated in FIG. 1 is the same as an imaging lens 1A of Example 1 described later together with FIG. 2. The plurality of light receiving elements constituting the imaging element 3 include photodiodes, for example. For example, the imaging element 3 is a charge coupled device (CCD) sensor, a complementary metal oxide semiconductor (CMOS) sensor, or the like.

The controller 40 includes an arithmetic unit 41, an input unit 42, an output unit 43, a signal transmission unit 44, a signal reception unit 45, and a storage unit 46. These components are configured to be able to transmit signals to one another via a bus 47. The controller 40 is configured as a computer including a CPU, a main memory (RAM), a storage, and a communication interface. Therefore, each of the above-described components 41, 42, ..., and 46 can be regarded as a processing circuit.

The input unit 42 receives a control signal from the outside. For example, when the distance measurement sensor 10 is mounted on a communication terminal such as a smartphone, the input unit 42 receives, as a control signal, a distance measurement start signal from a higher-level processor in the communication terminal. When the input unit 42 receives the control signal, the signal transmission unit 44 outputs a drive signal for lighting the light source 20. The light receiver 30 receives (images) reflected light in which light emitted from the light source 20 is reflected by the subject. The imaging element 3 (light receiving element) converts reflected light received through the imaging lens 1 into an electric signal (imaging signal), and transmits the electric signal to the controller 40. The signal reception unit 45 receives the imaging signal from the light receiver 30.

The arithmetic unit 41 measures the time from when the light emitted by the light source 20 is emitted to when the light is received by the imaging element 3, calculates the distance between the distance measurement sensor 10 and the subject from the time and the light speed, and generates distance measurement data. By calculating the distance for each light receiving element (pixel) constituting the imaging element 3, the arithmetic unit 41 can output the distance measurement data as image data. The output unit 43 outputs the distance measurement data calculated by the arithmetic unit 41 to the outside. For example, when mounted on the communication terminal as described above, the distance measurement sensor 10 outputs the distance measurement data to the higher-level processor in the communication terminal.

Overview of Imaging Lens

The imaging lens 1 according to the present embodiment includes the lens system 2 in which a first lens L1, a second lens L2, a third lens L3, and a fourth lens L4 are arranged in order from an object side. FIG. 1 illustrates respective lens surfaces of the lens system 2 as S1, S2, ..., and S8 in order from the object side. For example, the lens surface S1 means a lens surface on the object side of the first lens L1, and the lens surface S2 means a lens surface on the imaging surface side of the first lens L 1.

The first lens L1 has negative refractive power, and the lens surface S1 on the object side thereof is a convex surface. The second lens L2 has positive refractive power, and both the lens surface S3 on the object side and the lens surface S4 on the imaging surface side thereof are convex surfaces. The third lens L3 has positive refractive power, and the lens surface S6 on the imaging surface side thereof is a convex surface. The fourth lens L4 has negative refractive power, and the lens surface S8 on the imaging surface side thereof is a concave surface.

Note that, in the imaging lens 1 illustrated in FIG. 1, the lens surface S2 on the imaging surface side of the first lens L1 is a concave surface, the lens surface S5 on the object side of the third lens L3 is a concave surface, and the lens surface S7 on the object side of the fourth lens L4 is a convex surface. A bandpass filter 4 for transmitting near-infrared light is provided between the fourth lens L4 and the imaging surface IA (imaging element 3). Note that the bandpass filter 4 need not be provided. An optical member such as a sealing glass for protecting the imaging element 3 may be arranged at the position of the bandpass filter 4.

In the present embodiment, the lens system 2 satisfies the following Conditional Expressions (1) and (2).

$$f1/f < -4 \cdots (1)$$

$$0.8 < f2/f \cdots (2)$$

where f is the focal length of the lens system 2, f1 is the focal length of the first lens L1, and f2 is the focal length of the second lens L2.

The Conditional Expression (1) is a conditional expression that defines the negative refractive power of the first lens L1 in the first lens L1 having the negative refractive power. The larger the value of f1/f, which is a negative value, is, (the smaller the absolute value is), the stronger the negative refractive power in the first lens L1 is, and the smaller the value of f1/f is (the larger the absolute value is), the weaker the negative refractive power in the first lens L1 is.

When the value of f1/f exceeds the upper limit value in the Conditional Expression (1), the negative refractive power of the first lens L1 becomes too strong, and it becomes difficult to shorten the total length of the lens system 2 while suppressing the aberration. On the other hand, by satisfying the Conditional Expression (1) by setting the value of f1/f to be less than the upper limit value, the refractive power of the first lens L1 is appropriately defined, and it is possible to shorten the total length of the lens system 2. Note that the upper limit value of the Conditional Expression (1) is preferably -6.

The Conditional Expression (2) is a conditional expression that defines the positive refractive power of the second lens L2 in the second lens L2 having the positive refractive power. The smaller the value of f2/f, which is a positive value, is, the stronger the positive refractive power in the second lens L2 is, and the larger the value of f2/f is, the weaker the positive refractive power in the second lens L2 is.

In the lens system 2 in the present embodiment, the second lens L2 is a main lens for determining the refractive power of the entire lens system 2. When the refractive power of the second lens L2 becomes stronger to an extent that the value of f2/f falls below the lower limit value in the Conditional Expression (2), the occurrence of axial aberration increases and performance deterioration due to an eccentricity error increases. Therefore, the variation in the value of performance of the actually produced second lens L2 with respect to the performance design value of the second lens L2 increases, and the performance of the entire lens system 2 cannot be fully exhibited.

On the other hand, by satisfying the range of the Conditional Expression (2), it is possible to shorten the total length, increase the resolution, suppress the occurrence of axial aberration, and reduce performance deterioration due to an eccentricity error. As a result, it is possible to realize the lens system 2 that can reduce the production variation. Note that the lower limit value of the Conditional Expression (2) is preferably 0.9.

Furthermore, an upper limit value may be set in the Conditional Expression (2). In this case, the upper limit value of the Conditional Expression (2) is preferably, for example, 2, and more preferably 1.6. By setting the value of fl/f to be smaller than the upper limit value, it is easy to secure the refractive power of the second lens L2 and to secure the positive refractive power necessary for shortening the total length of the lens system 2 and increasing the diameter of the lens system 2.

In the present embodiment, the lens system 2 can further satisfy the following Conditional Expression (3).

$$f/Epd < 1.8 \cdots (3)$$

where Epd is an entrance pupil diameter.

The Conditional Expression (3) is a conditional expression that defines a so-called F-number. By satisfying the Conditional Expression (3) by setting the value of f/Epd to be less than the upper limit value, it is possible to secure a necessary light amount in a short exposure time even for the imaging element 3 that is small in size and high in definition.

In the present embodiment, the lens system 2 can further satisfy the following Conditional Expression (4).

$$R1/f < 1.8 \cdots (4)$$

where R1 is the radius of curvature of the lens surface S1 on the object side of the first lens L1.

The Conditional Expression (4) is a conditional expression that defines the relationship between the radius of curvature of the lens surface S1 on the object side of the first lens L1 and the focal length. By satisfying the Conditional Expression (4) by setting the value of R1/f to be less than the upper limit value, it is possible to suppress the divergence of an on-axis light ray in the first lens L1 and shorten the total length of the lens system 2. Note that the upper limit value of the Conditional Expression (4) is preferably 1.6.

A lower limit value may be set in the Conditional Expression (4). In this case, the lower limit value is preferably 0.5, and more preferably 0.7. By setting the value of R1/f to be larger than the lower limit value, it is possible to suppress weakening of the refractive power on the object side surface of the first lens L1 and shorten the total length of the lens system 2.

In the present embodiment, the lens system 2 can further satisfy the following Conditional Expression (5).

$$nd2 > 1.57 \cdots (5)$$

where nd2 is a refractive index of the second lens L2.

The Conditional Expression (5) is a conditional expression that defines the refractive index of the second lens L2. As described above, the second lens L2 is a main lens for determining the refractive power of the entire lens system 2. Therefore, when the refractive index nd2 of the second lens L2 falls below the lower limit value in the Conditional Expression (5), the refractive power of the entire lens system 2 cannot be secured, and the aberration generation amount increases.

On the other hand, by satisfying the Conditional Expression (5) by setting the refractive index nd2 of the second lens L2 to be larger than the lower limit value, it is possible to secure the refractive power of the second lens L2, and suppress the aberration generation amount in the entire lens system 2.

In the present embodiment, the lens system 2 can further satisfy the following Conditional Expression (6).

$$D23/f < 0.2 \cdots (6)$$

where D23 is a distance between the lens surface S2 on the imaging surface side of the first lens L1 and the lens surface S3 on the object side of second lens L2.

The Conditional Expression (6) is a conditional expression that defines a lens interval between the first lens L1 and the second lens L2. When the value of D23/f exceeds the upper limit value of the Conditional Expression (6), the interval between the first lens L1 and the second lens L2 increases, and the height of an off-axis light ray passing through the second lens L2 and the third lens L3 increases, and therefore it becomes difficult to downsize the lens system 2. Since the generation amount of off-axis aberration also increases, aberration correction becomes difficult.

On the other hand, by satisfying the Conditional Expression (6) by setting the value of D23/f to be smaller than the upper limit value, it is possible to reduce the effective diameters of the second lens L2 and the third lens L3. Furthermore, the aberration generation amount can also be reduced, and a high-resolution lens can be realized. Note that the upper limit value of the Conditional Expression (6) is preferably 0.15, and more preferably 0.12. A lower limit value of the Conditional Expression (6) may be set. In this case, the lower limit value of the Conditional Expression (6) is preferably 0.01, and more preferably 0.03.

In the present embodiment, the lens system 2 can further satisfy the following Conditional Expression (7).

$$1 < TTL/f < 2 \cdots (7)$$

where TTL is the total length of the lens system 2. More specifically, TTL is a length from the lens surface S1 on the object side of the first lens L1 to the imaging surface IA.

The Conditional Expression (7) is a conditional expression that defines the total length of the lens system 2. When the value of TTL/f exceeds the upper limit value of the Conditional Expression (7), the total length of the lens system 2 becomes long, and the lens system 2 cannot be downsized. When the value of TTL/f falls below the lower limit value of the Conditional Expression (7), the aberration generation amount of the entire lens system 2 cannot be suppressed.

On the other hand, by the value of TTL/f satisfying the range of the Conditional Expression (7), it is possible to suppress the aberration generation amount of the entire lens system 2 while downsizing the lens system 2. Note that the upper limit value of the Conditional Expression (7) is preferably 1.8. The lower limit value of the Conditional Expression (7) is preferably 1.2.

In the present embodiment, the lens system 2 can further satisfy the following Conditional Expression (8).

$$f4/f < -2 \cdots (8)$$

where f4 is the focal length of the fourth lens L4.

The Conditional Expression (8) defines the relationship between the focal length of the fourth lens L4 having negative refractive power and the focal length of the lens system 2. When the value of f4/f exceeds the upper limit value in the Conditional Expression (8), the refractive power of the fourth lens L4 becomes too strong, and thus aberration correction becomes difficult and performance deterioration due to an eccentricity error increases. The fourth lens L4 is close to the imaging surface IA, and is easily affected by heat generated in the imaging element 3 (light receiving element). In particular, in a plastic lens in which the change amounts in a linear expansion coefficient and a refractive index with temperature are larger than those of glass, a refractive power change accompanying a temperature change becomes large, and optical characteristics such as focal position fluctuation and resolution performance deteriorate.

On the other hand, by satisfying the Conditional Expression (8) by setting the value of f4/f to be smaller than the upper limit value, the refractive power of the fourth lens L4 can be set to an appropriate range, and thus it is possible to suppress the fluctuation in the optical characteristics due to a temperature change while suppressing performance deterioration due to an eccentricity error. Note that the upper limit value of the Conditional Expression (8) is preferably -3.

In the present embodiment, the lens system 2 can further satisfy the following Conditional Expression (9).

$$(R1 + R2)/(R1 - R2) > 6 \cdots (9)$$

where R1 is the radius of curvature of the lens surface S1 on the object side of the first lens L1, and R2 is the radius of curvature of the lens surface S2 on the imaging surface side of the first lens L 1.

The Conditional Expression (9) is a conditional expression that defines the shape of the first lens L 1. By setting the value of (R1 + R2)/(R1 - R2) to be larger than the lower limit value of the Conditional Expression (9), it is possible to suppress the refractive power of the first lens L1 from becoming too large, and easily reduce the amount of the aberration generated on each surface of the first lens L1.

As described above, according to the present embodiment, it is possible to provide the imaging lens 1 that can reduce production variation while being small in size and high in resolution. Moreover, use of the lens system 2 with a small F-number can realize the imaging lens 1 that can secure a peripheral light amount even when the angle of view is large.

In Patent Document 1 described above, the F-number is about 2.3 and it is difficult to provide a large-diameter lens having a small F-number. Also in Patent Document 2, the F-number is 2.0 to 2.6, and the half angle of view is as narrow as around 30 degrees. In particular, when the imaging lens 1 is applied to the distance measurement sensor 10 as illustrated in FIG. 1, a lens having a small F-number that can secure a wide angle of view (e.g., half angle of view of 35 degrees or more) and a peripheral light amount is desired.

On the other hand, according to the present embodiment, it is possible to provide the imaging lens 1 including the lens system 2 having a wide angle of view with a half angle of view of 35 degrees or more while having an F-number less than 1.8. Moreover, even with such the imaging lens 1, it is possible to reduce production variation while having a small size and a high resolution.

Examples

Hereinafter, examples of the imaging lens 1 of the present disclosure will be described. Parameters used for each example are as follows. In lens data and tables of the specification data of the lens system, "degree" is used as the unit of angle, and "mm" is used as the unit of length. The calculation wavelength of the focal length is 940 nm.

f: focal length of the lens system 2 (mm)
Fno: F-number (= f/Epd)
$\omega$: half angle of view
ImgH: maximum image height
TTL: total optical length of the lens system 2 (distance on optical axis from the lens surface S1 on the object side of the first lens L1 to the imaging surface IA)
i: lens surface number (i = 1, 2, ..., 8)
Ri: radius of curvature (mm) on the i-th lens surface
Dik: center interval between the i-th lens surface Si and the k-th (k = i + 1) lens surface Sk
nd: refractive index with respect to a d line of the lens
vd: Abbe number of the lens

Note that the notation of (STO) in the lens surface number indicates that a diaphragm surface STO is located on the corresponding lens surface Si. The surface number of the lens surface on the object side of the bandpass filter 4 is 9, and the surface number of the lens surface on the imaging surface side of the bandpass filter 4 is 10. Note that "inf" indicates that the surface is a flat surface.

In each example, all the lens surfaces Si have an aspherical shape. Here, when a distance (sag amount) in the optical axis direction from a tangential plane of a surface vertex is X, a height from the optical axis is H, R is a radius of curvature, K is a conic constant, and Am is an m-th order aspherical coefficient, the aspherical shape is expressed by the following expression.

$$X = (H^2/R)/[1 + \{1 - (1 + K)H^2/R^2\}^{1/2}] + \Sigma Am \cdot H^m \cdots (10)$$

Therefore, in the following, the value of Am in Expression (10) above is indicated, and the aspherical shape is specified. In the table of aspherical data, "E $\pm$ n" (n: natural number) of the numerical value of the aspherical coefficient is an exponential expression with a base of 10. That is, "E $\pm$ n" means "$\times$ 10$^{\pm n}$".

Example 1

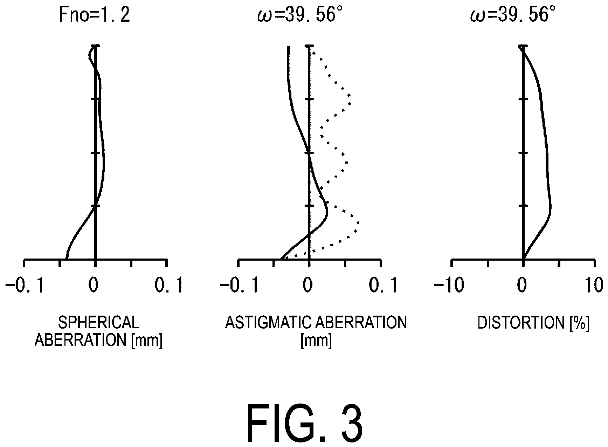

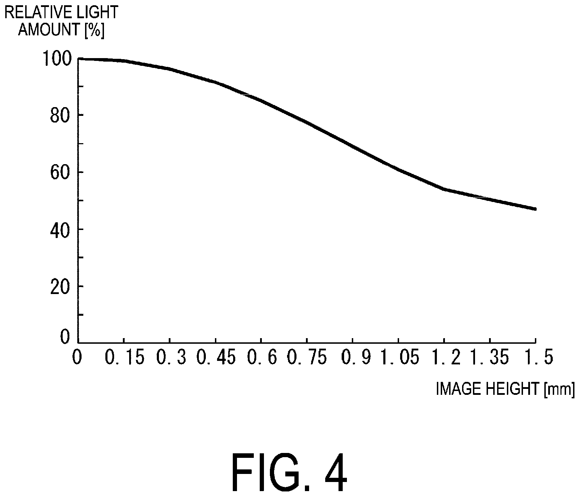

FIG. 2 is a configuration diagram of the imaging lens 1A in Example 1 of the present disclosure. FIG. 3 is an aberration diagram of the imaging lens 1A illustrated in FIG. 2 at a wavelength of 940 nm. FIG. 4 is a graph showing a relative light amount with respect to the image height of the imaging lens 1A illustrated in FIG. 2. The relative light amount indicates a ratio of the light amount at the image height position when the light amount at the optical axis position on the imaging surface IA is 100%.

The imaging lens 1A of Example 1 includes, in order from the object side, the first lens L1 having negative refractive power with the convex surface facing the object side and the concave surface facing the imaging surface side, an aperture diaphragm STO, the positive second lens L2 having a biconvex shape, the third lens L3 that is positive with the concave surface facing the object side and the convex surface facing the imaging surface side, and the fourth lens L4 that is negative with the convex surface facing the object side and the concave surface facing the imaging surface side.

Table 1 below shows lens data of the imaging lens 1A of Example 1.

[Table 1]

| SURFACE NUMBER | R | D | Nd | Vd |
|---|---|---|---|---|
| 1 | 1.454 | 0.311 | 1.66059 | 20.40 |
| 2(STO) | 1.320 | 0.118 | | |
| 3 | 2.137 | 0.486 | 1.66059 | 20.40 |
| 4 | -2.987 | 0.346 | | |
| 5 | -0.743 | 0.325 | 1.66059 | 20.40 |
| 6 | -0.693 | 0.050 | | |
| 7 | 1.281 | 0.344 | 1.66059 | 20.40 |
| 8 | 1.080 | 0.220 | | |
| 9 | inf | 0.210 | 1.51680 | 64.20 |
| 10 | inf | 0.590 | | |

The conic constant K and the aspherical coefficient Am in Example 1 are shown in Tables 2 and 3 below.

[Table 2]

| SURFACE NUMBER | K | A4 | A6 | A8 | A10 |
|---|---|---|---|---|---|
| 1 | -1.08701E+01 | 1.06868E-01 | -2.18447E-01 | 1.46335E-01 | 4.05416E-02 |
| 2 | 1.86314E-01 | -5.84618E-02 | -6.12966E-03 | -4.29029E-02 | 4.23353E-02 |
| 3 | -3.41066E+00 | -4.92524E-03 | -9.14976E-02 | 1.98285E-01 | -3.11397E-01 |
| 4 | 5.89147E+00 | -2.79546E-02 | -1.01927E-01 | 3.39892E-01 | -8.78144E-01 |
| 5 | -1.19051E+00 | 2.22084E-01 | -7.67619E-01 | 8.55274E-01 | 3.51590E-01 |
| 6 | -1.54651E+00 | 6.69965E-01 | -4.42672E+00 | 1.60045E+01 | -3.77402E+01 |
| 7 | -5.00000E+01 | 2.03498E+00 | -1.25672E+01 | 4.55045E+01 | -1.07387E+02 |
| 8 | -3.39036E+00 | -7.02592E-02 | -5.34161E+00 | 3.57402E+01 | -1.31755E+02 |

[Table 3]

| SURFACE NUMBER | A12 | A14 | A16 | A18 | A20 |
|---|---|---|---|---|---|
| 1 | -2.16939E-01 | 1.63771E-01 | -3.62885E-02 | 0.00000E+00 | 0.00000E+00 |
| 2 | -3.57206E-02 | 1.57575E-02 | 0.00000E+00 | 0.00000E+00 | 0.00000E+00 |
| 3 | 1.85084E-01 | -3.22337E-02 | 0.00000E+00 | 0.00000E+00 | 0.00000E+00 |
| 4 | 1.05977E+00 | -5.81026E-01 | 1.17311E-01 | 0.00000E+00 | 0.00000E+00 |
| 5 | -1.18622E+00 | 7.67283E-01 | -1.59680E-01 | 0.00000E+00 | 0.00000E+00 |
| 6 | 5.86574E+01 | -5.60438E+01 | 2.93878E+01 | -6.38547E+00 | 0.00000E+00 |
| 7 | 1.66344E+02 | -1.67935E+02 | 1.06491E+02 | -3.86173E+01 | 6.12527E+00 |
| 8 | 2.93947E+02 | -4.08451E+02 | 3.45533E+02 | -1.63095E+02 | 3.29722E+01 |

The focal length f, the F-number, the half angle of view ω, the maximum image height ImgH, and the total optical length TTL of the imaging lens 1A in Example 1 are shown in Table 4 below.

[Table 4]

| | INF |
|---|---|
| f | 1.80 |

(continued)

|  | INF |
|---|---|
| Fno | 1.20 |
| ω | 39.56 |
| ImgH | 1.5 |
| TTL | 3.00 |

Example 2

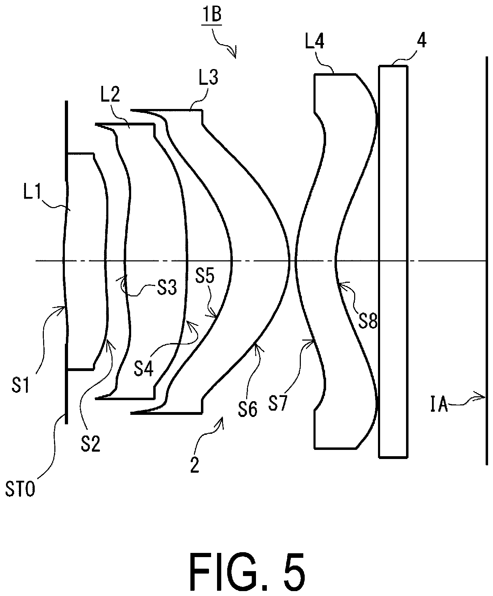

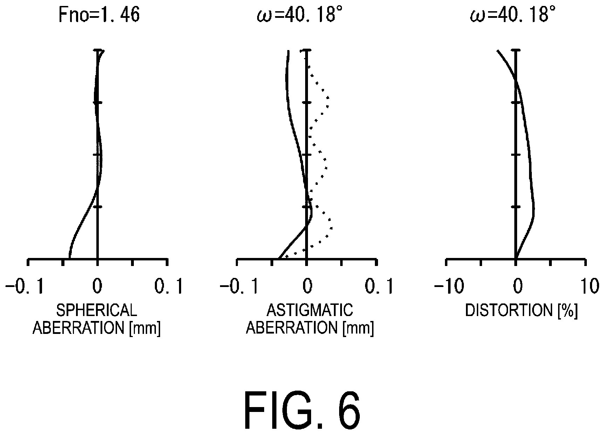

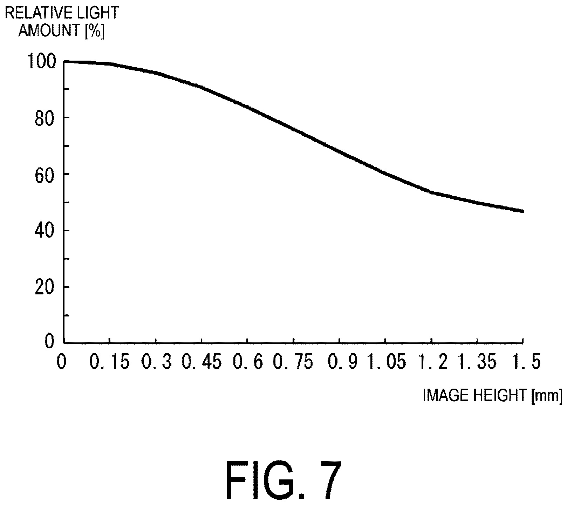

FIG. 5 is a configuration diagram of an imaging lens 1B in Example 2 of the present disclosure. FIG. 6 is an aberration diagram of the imaging lens 1B illustrated in FIG. 5. FIG. 7 is a graph showing a relative light amount with respect to the image height of the imaging lens 1B illustrated in FIG. 5. The relative light amount indicates a ratio of the light amount at the image height position when the light amount at the optical axis position on the imaging surface IA is 100%.

The imaging lens 1B of Example 2 includes, in order from the object side, the aperture diaphragm STO, the first lens L1 having negative refractive power with the convex surface facing the object side and the concave surface facing the imaging surface side, the positive second lens L2 having a biconvex shape, the third lens L3 that is positive with the concave surface facing the object side and the convex surface facing the imaging surface side, and the fourth lens L4 that is negative with the convex surface facing the object side and the concave surface facing the imaging surface side.

Table 5 below shows lens data of the imaging lens 1B of Example 2.

[Table 5]

| SURFACE NUMBER | R | D | Nd | Vd |
|---|---|---|---|---|
| 1(STO) | 2.746 | 0.310 | 1.66059 | 20.40 |
| 2 | 2.603 | 0.143 |  |  |
| 3 | 2.003 | 0.460 | 1.66059 | 20.40 |
| 4 | -4.294 | 0.330 |  |  |
| 5 | -0.737 | 0.427 | 1.66059 | 20.40 |
| 6 | -0.635 | 0.050 |  |  |
| 7 | 0.979 | 0.292 | 1.66059 | 20.40 |
| 8 | 0.691 | 0.321 |  |  |
| 9 | inf | 0.210 | 1.51680 | 64.20 |
| 10 | inf | 0.590 |  |  |

The conic constant K and the aspherical coefficient Am in Example 2 are shown in Tables 6 and 7 below.

[Table 6]

| SURFACE NUMBER | K | A4 | A6 | A8 | A10 |
|---|---|---|---|---|---|
| 1 | -5.00000E+01 | 3.32693E-03 | -4.61174E-02 | 3.38620E-02 | -1.88343E-02 |
| 2 | -9.52724E+00 | -1.29649E-01 | -2.37921E-02 | -6.82874E-02 | 1.79584E-01 |
| 3 | -2.91237E+01 | 7.44505E-02 | -4.85028E-01 | 7.06718E-01 | -1.18566E+00 |
| 4 | 8.09290E+00 | 2.34144E-03 | 6.55845E-02 | -1.00188E+00 | 1.67207E+00 |
| 5 | -1.08244E+00 | 1.61333E-01 | 4.06368E-01 | -4.63403E+00 | 1.27787E+01 |
| 6 | -1.30350E+00 | 3.20590E-01 | -6.34110E-01 | -5.60764E-01 | 2.80503E+00 |
| 7 | -1.69172E+01 | 1.97726E+00 | -1.07557E+01 | 3.44923E+01 | -7.45768E+01 |
| 8 | -5.51853E+00 | 7.50829E-01 | -4.11625E+00 | 9.70306E+00 | -1.71294E+01 |

[Table 7]

| SURFACE NUMBER | A12 | A14 | A16 | A18 | A20 |
|---|---|---|---|---|---|
| 1 | -2.84466E-04 | 2.06834E-03 | 0.00000E+00 | 0.00000E+00 | 0.00000E+00 |
| 2 | -1.84430E-01 | 7.76225E-02 | 0.00000E+00 | 0.00000E+00 | 0.00000E+00 |
| 3 | 1.08707E+00 | -3.34613E-01 | 0.00000E+00 | 0.00000E+00 | 0.00000E+00 |
| 4 | -1.16729E+00 | 3.17903E-01 | 0.00000E+00 | 0.00000E+00 | 0.00000E+00 |
| 5 | -1.60725E+01 | 9.85693E+00 | -2.38083E+00 | 0.00000E+00 | 0.00000E+00 |
| 6 | -2.87716E+00 | 9.93022E-01 | -5.90326E-05 | 0.00000E+00 | 0.00000E+00 |
| 7 | 1.03775E+02 | -8.81659E+01 | 4.09714E+01 | -7.87558E+00 | 0.00000E+00 |
| 8 | 2.18148E+01 | -1.85240E+01 | 8.97452E+00 | -1.80366E+00 | 0.00000E+00 |

The focal length f, the F-number, the half angle of view $\omega$, the maximum image height ImgH, and the total optical length TTL of the imaging lens 1B in Example 2 are shown in Table 8 below.

[Table 8]

| | INF |
|---|---|
| f | 1.80 |
| Fno | 1.46 |
| $\omega$ | 40.18 |
| ImgH | 1.5 |
| TTL | 3.13 |

Example 3

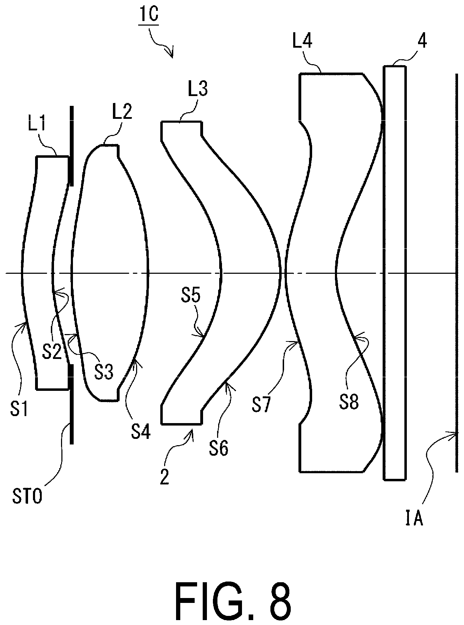

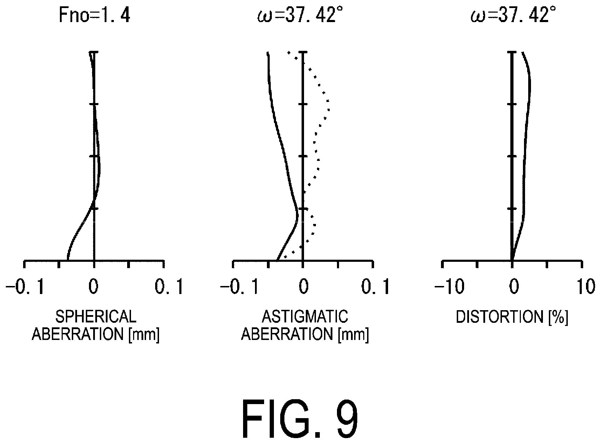

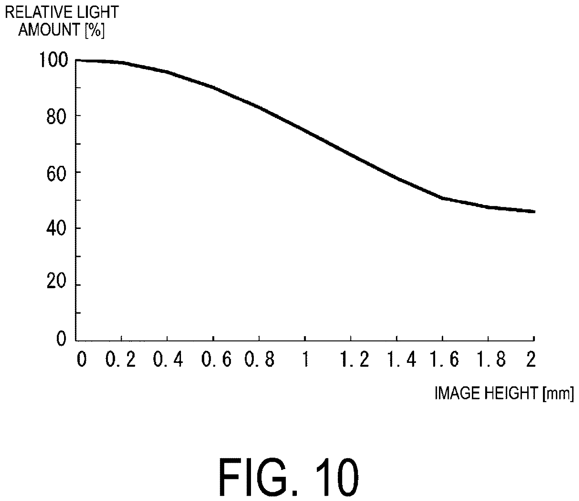

FIG. 8 is a configuration diagram of an imaging lens 1C in Example 3 of the present disclosure. FIG. 9 is an aberration diagram of the imaging lens 1C illustrated in FIG. 8. FIG. 10 is a graph showing a relative light amount with respect to the image height of the imaging lens 1C illustrated in FIG. 8. The relative light amount indicates a ratio of the light amount at the image height position when the light amount at the optical axis position on the imaging surface IA is 100%.
The imaging lens 1C of Example 3 includes, in order from the object side, the first lens L1 having negative refractive power with the convex surface facing the object side and the concave surface facing the imaging surface side, the aperture diaphragm STO, the positive second lens L2 having a biconvex shape, the third lens L3 that is positive with the concave surface facing the object side and the convex surface facing the imaging surface side, and the fourth lens L4 that is negative with the convex surface facing the object side and the concave surface facing the imaging surface side.
Table 9 below shows lens data of the imaging lens 1C of Example 3.

[Table 9]

| SURFACE NUMBER | R | D | Nd | Vd |
|---|---|---|---|---|
| 1 | 2.054 | 0.300 | 1.57137 | 34.45 |
| 2(STO) | 1.670 | 0.186 | | |
| 3 | 2.568 | 0.746 | 1.57137 | 34.45 |
| 4 | -3.129 | 0.716 | | |
| 5 | -1.148 | 0.577 | 1.57137 | 34.45 |
| 6 | -0.959 | 0.050 | | |
| 7 | 1.268 | 0.493 | 1.57137 | 34.45 |
| 8 | 0.886 | 0.472 | | |
| 9 | inf | 0.210 | 1.51680 | 64.20 |

(continued)

| SURFACE NUMBER | R | D | Nd | Vd |
|---|---|---|---|---|
| 10 | inf | 0.590 | | |

The conic constant K and the aspherical coefficient Am in Example 3 are shown in Tables 10 and 11 below.

[Table 10]

| SURFACE NUMBER | K | A4 | A6 | A8 | A10 |
|---|---|---|---|---|---|
| 1 | -2.47277E+01 | 2.16843E-01 | -6.07833E-01 | 8.98985E-01 | -8.70638E-01 |
| 2 | 7.65578E-01 | -1.72240E-01 | -4.92781E-02 | 4.59690E-02 | -4.78214E-02 |
| 3 | 2.01809E+00 | -8.11924E-02 | -1.61615E-03 | -6.58251E-02 | 4.06763E-02 |
| 4 | -1.74382E+00 | -3.58763E-02 | -2.80823E-02 | 1.69373E-02 | -1.78214E-02 |
| 5 | -6.78422E-01 | 1.38276E-01 | -2.11680E-01 | 1.08518E-02 | 3.37534E-01 |
| 6 | -1.22676E+00 | 4.60690E-02 | 3.02837E-03 | -2.00185E-01 | 2.88373E-01 |
| 7 | -1.23582E+01 | 2.85625E-01 | -7.08151E-01 | 8.98351E-01 | -7.22018E-01 |
| 8 | -3.99198E+00 | 1.85424E-02 | -1.10265E-01 | 1.27981E-01 | -9.16217E-02 |

[Table 11]

| SURFACE NUMBER | A12 | A14 | A16 | A18 | A20 |
|---|---|---|---|---|---|
| 1 | 4.75474E-01 | -1.08433E-01 | 0.00000E+00 | 0.00000E+00 | 0.00000E+00 |
| 2(STO) | 3.54675E-02 | 0.00000E+00 | $\beta$.00000E+00 | 0.00000E+00 | 0.00000E+00 |
| 3 | 7.08390E-03 | 0.00000E+00 | 0.00000E+00 | 0.00000E+00 | 0.00000E+00 |
| 4 | 1.02045E-02 | 0.00000E+00 | 0.00000E+00 | 0.00000E+00 | 0.00000E+00 |
| 5 | -3.33930E-01 | 1.37657E-01 | -2.26594E-02 | 0.00000E+00 | 0.00000E+00 |
| 6 | -1.69633E-01 | 4.88767E-02 | -5.88561E-03 | 0.00000E+00 | 0.00000E+00 |
| 7 | 3.51165E-01 | -9.44697E-02 | 1.08740E-02 | -8.45763E-05 | 0.00000E+00 |
| 8 | 4.05007E-02 | -1.06987E-02 | 1.51996E-03 | -8.79530E-05 | 0.00000E+00 |

The focal length f, the F-number, the half angle of view $\omega$, the maximum image height ImgH, and the total optical length TTL of the imaging lens 1C in Example 3 are shown in Table 12 below.

[Table 12]

| | INF |
|---|---|
| f | 2.55 |
| Fno | 1.40 |
| $\omega$ | 37.42 |
| ImgH | 2.0 |
| TTL | 4.25 |

Example 4

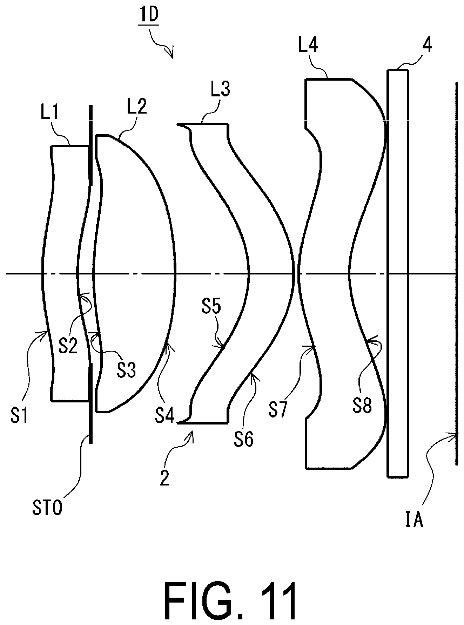

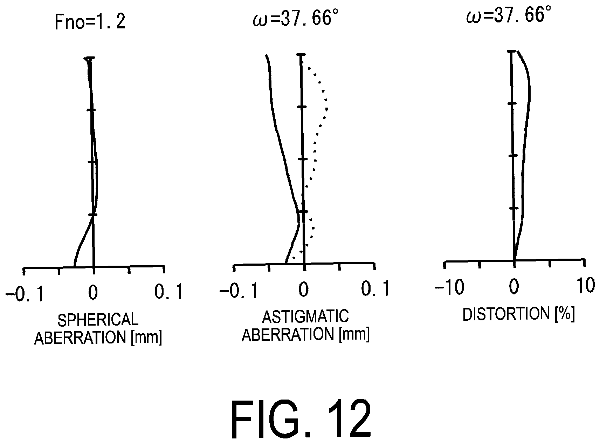

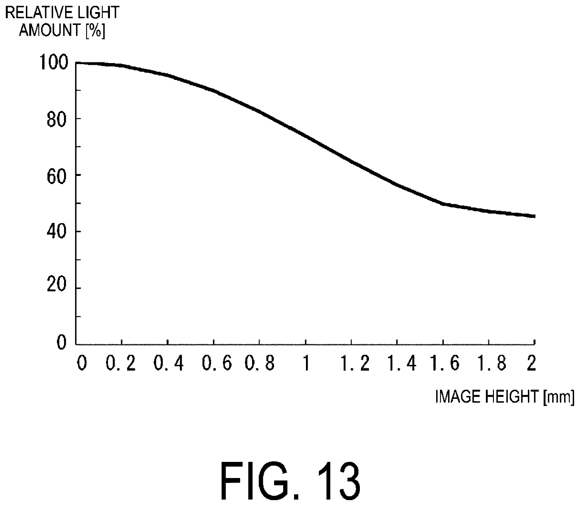

FIG. 11 is a configuration diagram of an imaging lens 1D in Example 4 of the present disclosure. FIG. 12 is an aberration diagram of the imaging lens 1D illustrated in FIG. 11. FIG. 13 is a graph showing a relative light amount with respect to the image height of the imaging lens 1D illustrated in FIG. 11. The relative light amount indicates a ratio of the light amount at the image height position when the light amount at the optical axis position on the imaging surface IA is 100%.

The imaging lens 1D of Example 4 includes, in order from the object side, the first lens L1 having negative refractive power with the convex surface facing the object side and the concave surface facing the imaging surface side, the aperture diaphragm STO, the positive second lens L2 having a biconvex shape, the third lens L3 that is positive with the concave surface facing the object side and the convex surface facing the imaging surface side, and the fourth lens L4 that is negative with the convex surface facing the object side and the concave surface facing the imaging surface side.

Table 13 below shows lens data of the imaging lens 1D of Example 4.

[Table 13]

| SURFACE NUMBER | R | D | Nd | Vd |
|---|---|---|---|---|
| 1 | 2.277 | 0.361 | 1.66059 | 20.40 |
| 2(STO) | 1.812 | 0.164 | | |
| 3 | 2.832 | 0.837 | 1.66059 | 20.40 |
| 4 | -2.940 | 0.751 | | |
| 5 | -0.996 | 0.464 | 1.66059 | 20.40 |
| 6 | -1.062 | 0.050 | | |
| 7 | 1.255 | 0.518 | 1.66059 | 20.40 |
| 8 | 1.049 | 0.396 | | |
| 9 | inf | 0.210 | 1.51680 | 64.20 |
| 10 | inf | 0.590 | | |

The conic constant K and the aspherical coefficient Am in Example 4 are shown in Tables 14 and 15 below.

[Table 14]

| SURFACE NUMBER | K | A4 | A6 | A8 | A10 |
|---|---|---|---|---|---|
| 1 | -2.58850E+01 | 3.15736E-01 | -1.19292E+00 | 2.01972E+00 | -2.28616E+00 |
| 2 | 6.93122E-01 | -1.99850E-01 | -7.43085E-02 | -8.65498E-02 | 1.43592E-01 |
| 3 | 6.31613E-02 | -8.55429E-02 | -6.12040E-02 | -4.63096E-02 | -2.18443E-01 |
| 4 | -1.15706E+00 | -3.25646E-02 | 4.68939E-03 | -4.23077E-02 | 2.66283E-02 |
| 5 | -8.81820E-01 | 2.64729E-01 | -5.46690E-01 | 8.41441E-01 | -9.55735E-01 |
| 6 | -1.28642E+00 | -1.50472E-01 | 1.90958E+00 | -9.27074E+00 | 2.42541E+01 |
| 7 | -1.09225E+01 | 1.71546E-01 | -4.19919E-01 | 4.66004E-01 | -3.08204E-01 |
| 8 | -4.76002E+00 | 1.81787E-02 | -1.00466E-01 | 1.15175E-01 | -8.53170E-02 |

[Table 15]

| SURFACE NUMBER | A12 | A14 | A16 | A18 | A20 |
|---|---|---|---|---|---|
| 1 | 1.41897E+00 | -3.60906E-01 | 1.14640E-02 | 0.00000E+00 | 0.00000E+00 |
| 2 | -1.10815E-01 | 5.28797E-02 | 0.00000E+00 | 0.00000E+00 | 0.00000E+00 |
| 3 | 2.98041E-01 | -8.24451E-02 | 0.00000E+00 | 0.00000E+00 | 0.00000E+00 |
| 4 | -4.77272E-03 | -8.60685E-04 | 0.00000E+00 | 0.00000E+00 | 0.00000E+00 |
| 5 | 8.58562E-01 | -5.06943E-01 | 1.63901E-01 | -2.16797E-02 | 0.00000E+00 |
| 6 | -3.71110E+01 | 3.50089E+01 | -1.90956E+01 | 4.60407E+00 | 0.00000E+00 |
| 7 | 9.30594E-02 | 6.80106E-03 | -1.18238E-02 | 2.12790E-03 | 0.00000E+00 |
| 8 | 3.93623E-02 | -1.08777E-02 | 1.62307E-03 | -9.96590E-05 | 0.00000E+00 |

The focal length f, the F-number, the half angle of view ω, the maximum image height ImgH, and the total optical length TTL of the imaging lens 1D in Example 4 are shown in Table 16 below.

[Table 16]

|  | INF |
|---|---|
| f | 2.55 |
| Fno | 1.20 |
| ω | 37.66 |
| ImgH | 2.0 |
| TTL | 4.25 |

Example 5

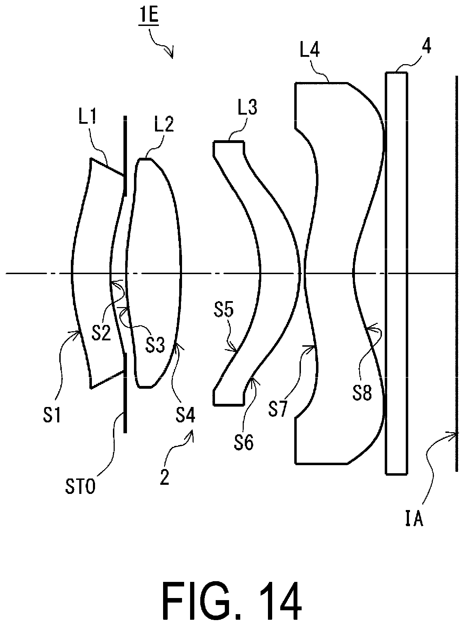

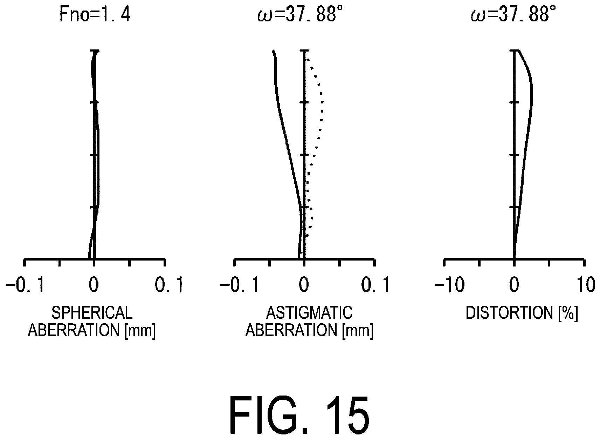

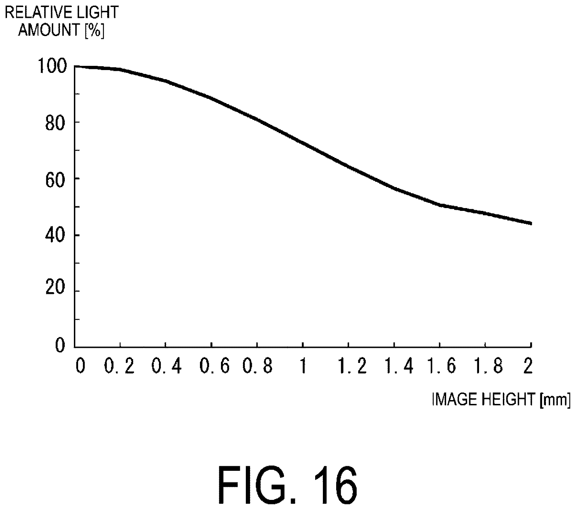

FIG. 14 is a configuration diagram of an imaging lens 1E in Example 5 of the present disclosure. FIG. 15 is an aberration diagram of the imaging lens 1E illustrated in FIG. 14. FIG. 16 is a graph showing a relative light amount with respect to the image height of the imaging lens 1E illustrated in FIG. 14. The relative light amount indicates a ratio of the light amount at the image height position when the light amount at the optical axis position on the imaging surface IA is 100%.

The imaging lens 1E of Example 5 includes, in order from the object side, the first lens L1 having negative refractive power with the convex surface facing the object side and the concave surface facing the imaging surface side, the aperture diaphragm STO, the positive second lens L2 having a biconvex shape, the third lens L3 that is positive with the concave surface facing the object side and the convex surface facing the imaging surface side, and the fourth lens L4 that is negative with the convex surface facing the object side and the concave surface facing the imaging surface side.

Table 17 below shows lens data of the imaging lens 1E of Example 5.

[Table 17]

| SURFACE NUMBER | R | D | Nd | Vd |
|---|---|---|---|---|
| 1 | 1.863 | 0.383 | 1.66059 | 20.40 |
| 2(STO) | 1.705 | 0.159 | | |
| 3 | 2.724 | 0.547 | 1.66059 | 20.40 |
| 4 | -5.067 | 0.789 | | |
| 5 | -1.348 | 0.396 | 1.66059 | 20.40 |
| 6 | -1.108 | 0.050 | | |
| 7 | 1.320 | 0.489 | 1.66059 | 20.40 |
| 8 | 0.931 | 0.326 | | |
| 9 | inf | 0.210 | 1.51680 | 64.20 |
| 10 | inf | 0.590 | | |

The conic constant K and the aspherical coefficient Am in Example 5 are shown in Tables 18 and 19 below.

[Table 18]

| SURFACE NUMBER | K | A4 | A6 | A8 | A10 |
|---|---|---|---|---|---|
| 1 | -1.83003E+01 | 3.08451E-01 | -8.31134E-01 | 1.31965E+00 | -1.45872E+00 |
| 2 | 1.63869E+00 | -9.28014E-02 | -5.89719E-02 | -1.37471E-02 | 1.68877E-02 |
| 3 | -9.07373E-01 | -3.97467E-02 | -6.41951E-03 | -1.49956E-01 | 1.21011E-01 |
| 4 | 4.14396E+00 | -4.10645E-02 | 2.80552E-02 | -2.05799E-01 | 2.43225E-01 |
| 5 | -3.67447E-01 | 4.31910E-01 | -1.94102E+00 | 4.19635E+00 | -6.48698E+00 |

(continued)

| SURFACE NUMBER | K | A4 | A6 | A8 | A10 |
|---|---|---|---|---|---|
| 6 | -1.15507E+00 | -1.98894E-02 | -2.01547E-01 | 6.85372E-01 | -1.36830E+00 |
| 7 | -4.26914E+00 | -9.74332E-01 | 1.05024E+00 | 4.63534E-01 | -3.44825E+00 |
| 8 | -1.36315E+00 | -4.70566E+00 | 1.38731E+01 | -2.99745E+01 | 4.40709E+01 |

[Table 19]

| SURFACE NUMBER | A12 | A14 | A16 | A18 | A20 |
|---|---|---|---|---|---|
| 1 | 9.09635E-01 | -2.30233E-01 | 0.00000E+00 | 0.00000E+00 | 0.00000E+00 |
| 2(STO) | -4.48090E-03 | 0.00000E+00 | 0.00000E+00 | 0.00000E+00 | 0.00000E+00 |
| 3 | -1.12875E-02 | 0.00000E+00 | 0.00000E+00 | 0.00000E+00 | 0.00000E+00 |
| 4 | -1.06522E-01 | 0.00000E+00 | 0.00000E+00 | 0.00000E+00 | 0.00000E+00 |
| 5 | 8.50061E+00 | -6.57836E+00 | 1.99424E+00 | 0.00000E+00 | 0.00000E+00 |
| 6 | 1.55516E+00 | -8.36051E-01 | 1.67794E-01 | 0.00000E+00 | 0.00000E+00 |
| 7 | 4.25102E+00 | -1.53725E+00 | -7.47935E-01 | 5.00956E-01 | 0.00000E+00 |
| 8 | -4.29091E+01 | 2.61459E+01 | -9.24600E+00 | 1.51378E+00 | 0.00000E+00 |

The focal length f, the F-number, the half angle of view $\omega$, the maximum image height ImgH, and the total optical length TTL of the imaging lens 1E in Example 5 are shown in Table 20 below.

[Table 20]

|  | INF |
|---|---|
| f | 2.55 |
| Fno | 1.40 |
| $\omega$ | 37.88 |
| ImgH | 2.0 |
| TTL | 3.85 |

Table 21 shows corresponding values of the Conditional Expressions (1) to (9) in the lens systems of Examples 1 to 5. Tables 22 and 23 show numerical values related to the Conditional Expressions (1) to (9). As shown in Table 21, all of the Conditional Expressions (1) to (9) are satisfied in any of the examples.

[Table 21]

| | CONDITIONAL EXPRESSION (1) | CONDITIONAL EXPRESSION (2) | CONDITIONAL EXPRESSION (3) | CONDITIONAL EXPRESSION (4) | CONDITIONAL EXPRESSION (5) | CONDITIONAL EXPRESSION (6) | CONDITIONAL EXPRESSION (7) | CONDITIONAL EXPRESSION (8) | CONDITIONAL EXPRESSION (9) |
|---|---|---|---|---|---|---|---|---|---|
| Example 1 | -129.34 | 1.13 | 1.20 | 0.81 | 1.6606 | 0.07 | 1.67 | -17.91 | 20.74 |
| Example 2 | -277.80 | 1.23 | 1.46 | 1.53 | 1.6606 | 0.08 | 1.74 | -3.40 | 37.47 |
| Example 3 | -8.71 | 1.04 | 1.40 | 0.81 | 1.5714 | 0.07 | 1.67 | -3.85 | 9.69 |
| Example 4 | -7.84 | 0.94 | 1.20 | 0.89 | 1.6606 | 0.06 | 1.67 | -157.28 | 8.79 |
| Example 5 | -196.08 | 1.13 | 1.40 | 0.73 | 1.6606 | 0.06 | 1.51 | -3.81 | 22.47 |

[Table 22]

|  | f | f1 | f2 | f3 | f4 | nd2 |
|---|---|---|---|---|---|---|
| Example 1 | 1.80 | -232.81 | 2.04 | 4.60 | -32.23 | 1.66059 |
| Example 2 | 1.80 | -500.05 | 2.22 | 2.75 | -6.12 | 1.66059 |
| Example 3 | 2.55 | -22.22 | 2.65 | 4.99 | -9.83 | 1.57137 |
| Example 4 | 2.55 | -20.00 | 2.41 | 14.69 | -401.06 | 1.66059 |
| Example 5 | 2.55 | -500.00 | 2.87 | 5.99 | -9.72 | 1.66059 |

[Table 23]

|  | EPD | D1-2 | L1R1 | L1R2 | TTL |
|---|---|---|---|---|---|
| Example 1 | 1.500 | 0.12 | 1.4538 | 1.3200 | 3.000 |
| Example 2 | 1.233 | 0.14 | 2.7455 | 2.6028 | 3.131 |
| Example 3 | 1.821 | 0.19 | 2.0541 | 1.6699 | 4.250 |
| Example 4 | 2.125 | 0.16 | 2.2772 | 1.8120 | 4.250 |
| Example 5 | 1.821 | 0.16 | 1.8632 | 1.7045 | 3.850 |

As illustrated in the aberration diagrams (FIGS. 3, 7, 11, 15, and 19) of the respective examples, the lens system 2 in which the transmission light amount is secured and the aberration is corrected well can be realized in spite of having a wide angle of view of a half angle of view of 35 degrees or more. As shown in the graphs (FIGS. 4, 8, 12, 16, and 20) of the peripheral light amount with respect to the image height of the imaging lens of the respective examples, the light amount (peripheral light amount) at the position where the image height is high can be secured up to near 50% of the light amount at the optical axis position in spite of having a wide angle of view.

Although the embodiments of the present disclosure have been described above, configurations, combinations thereof, and the like in each embodiment are merely examples, and addition, omission, substitution, and other changes of the configurations can be appropriately made without departing from the gist of the present disclosure. The present disclosure is not limited by the embodiments, but is limited only by the claims.

Industrial Applicability

The present disclosure is useful for providing an imaging lens that can reduce production variation while being small in size and high in resolution. The imaging device applied with the imaging lens of the present disclosure is not limited to the distance measurement sensor exemplified in the above embodiment. For example, the present disclosure can also be applied to a camera for imaging that forms an image of visible light. The distance measurement sensor applied with the imaging lens of the present disclosure is, for example, a distance measurement sensor that receives reflected light of a light source that emits light of a single wavelength such as near-infrared light or visible light. The distance measurement sensor mounted with the imaging lens of the present disclosure is useful for providing, for example, an imaging assist function in an imaging camera such as background blurring and autofocus, an automatic drive technology of an automatic cleaner, an automobile, and the like, a face authentication technology, an AR space realization technology, and the like.

Reference Signs List

1, 1A, 1B, 1C, 1D, 1E Imaging lens
2 Lens system
3 Imaging element (light receiving element)
10 Distance measurement sensor (imaging device)
20 Light source
L1 First lens
L2 Second lens
L3 Third lens
L4 Fourth lens

**Claims**

1. An imaging lens comprising:

   a lens system in which lenses are arranged,
   wherein
   the first lens has negative refractive power, and a lens surface on an object side of the first lens is a convex surface,
   the second lens has positive refractive power, and both a lens surface on an object side and a lens surface on an imaging surface side of the second lens are convex surfaces,
   the third lens has positive refractive power, and a lens surface on an imaging surface side of the third lens is a convex surface,
   the fourth lens has negative refractive power, and a lens surface on an imaging surface side of the fourth lens is a concave surface, and
   the lens system satisfies conditions of:

   $$f1/f < -4 \cdots (1)$$

   $$0.8 < f2/f \cdots (2)$$

   where f is a focal length of the lens system, f1 is a focal length of the first lens, and f2 is a focal length of the second lens.

2. The imaging lens according to claim 1, wherein the lens system further satisfies a condition of:

   $$f/Epd < 1.8 \cdots (3)$$

   where Epd is an entrance pupil diameter.

3. The imaging lens according to claim 1 or 2, wherein the lens system further satisfies a condition of:

   $$R1/f < 1.8 \cdots (4)$$

   where R1 is a radius of curvature of the lens surface on the object side of the first lens.

4. The imaging lens according to any one of claims 1 to 3, wherein the lens system further satisfies a condition of:

   $$nd2 > 1.57 \cdots (5)$$

   where nd2 is a refractive index of the second lens.

5. The imaging lens according to any one of claims 1 to 4, wherein the lens system further satisfies a condition of:

   $$D23/f < 0.2 \cdots (6)$$

   where D23 is a distance between a lens surface on an imaging surface side of the first lens and the lens surface on the object side of the second lens.

6. The imaging lens according to any one of claims 1 to 5, wherein the lens system further satisfies a condition of:

   $$1 < TTL/f < 2 \cdots (7)$$

   where TTL is a total length of the lens system.

7. The imaging lens according to any one of claims 1 to 6, wherein the lens system further satisfies a condition of:

$$f4/f < -2 \cdots (8)$$

where f4 is a focal length of the fourth lens.

8. An imaging device comprising the imaging lens according to any one of claims 1 to 7.

9. The imaging device according to claim 8, comprising:

a light source configured to emit light; and
a light receiving element configured to receive, through the imaging lens, reflected light where light from the light source is reflected by a subject,
wherein the imaging device is configured as a distance measurement sensor that calculates a distance to the subject by measuring a time from when the light source emits light to when the reflected light is received.

FIG. 1

FIG. 2

Fno=1. 2          ω=39. 56°          ω=39. 56°

-0. 1      0      0. 1      -0. 1      0      0. 1      -10      0      10

SPHERICAL          ASTIGMATIC ABERRATION          DISTORTION [%]
ABERRATION [mm]          [mm]

# FIG. 3

FIG. 4

# FIG. 5

Fno=1. 46          ω=40. 18°          ω=40. 18°

-0. 1        0        0. 1     -0. 1        0        0. 1     -10        0        10

SPHERICAL                 ASTIGMATIC              DISTORTION [%]
ABERRATION [mm]      ABERRATION [mm]

# FIG. 6

FIG. 7

# FIG. 8

Fno=1.4          ω=37.42°          ω=37.42°

-0.1    0    0.1     -0.1    0    0.1     -10    0    10

SPHERICAL              ASTIGMATIC              DISTORTION [%]
ABERRATION [mm]        ABERRATION [mm]

FIG. 9

RELATIVE LIGHT
AMOUNT [%]

IMAGE HEIGHT [mm]

# FIG. 10

FIG. 11

Fno=1. 2          ω=37. 66°          ω=37. 66°

-0. 1     0     0. 1     -0. 1     0     0. 1     -10     0     10

SPHERICAL          ASTIGMATIC          DISTORTION [%]
ABERRATION [mm]     ABERRATION [mm]

# FIG. 12

FIG. 13

# FIG. 14

Fno=1. 4                    ω=37. 88°                    ω=37. 88°

-0. 1      0      0. 1      -0. 1      0      0. 1      -10      0      10

SPHERICAL                ASTIGMATIC              DISTORTION [%]
ABERRATION [mm]          ABERRATION [mm]

FIG. 15

FIG. 16

## INTERNATIONAL SEARCH REPORT

International application No.

**PCT/JP2023/008595**

### A. CLASSIFICATION OF SUBJECT MATTER

***G02B 13/00***(2006.01)i; ***G02B 13/18***(2006.01)i
FI: G02B13/00; G02B13/18

According to International Patent Classification (IPC) or to both national classification and IPC

### B. FIELDS SEARCHED

Minimum documentation searched (classification system followed by classification symbols)

G02B13/00; G02B13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2015/0185439 A1 (GENIUS ELECTRONIC OPTICAL CO., LTD.) 02 July 2015 (2015-07-02)<br>    examples 1-6, etc. | 1-6, 8-9 |
| X | US 2015/0185438 A1 (WANG, Kailun) 02 July 2015 (2015-07-02)<br>    examples 1-3, 5-7, etc. | 1-6, 8-9 |
| X | US 2015/0109686 A1 (ABILITY OPTO-ELECTRONICS TECHNOLOGY CO., LTD.) 23 April 2015 (2015-04-23)<br>    examples 2-3, etc. | 1-6, 8-9 |
| X | US 2015/0185435 A1 (GENIUS ELECTRONIC OPTICAL CO., LTD.) 02 July 2015 (2015-07-02)<br>    examples 3-6, etc. | 1-6, 8-9 |
| X | KR 10-2014-0003129 A (NAMUGA, CO., LTD.) 09 January 2014 (2014-01-09)<br>    example 1, etc. | 1-2, 4, 6-9 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 495 655 A1

**INTERNATIONAL SEARCH REPORT**

International application No.

**PCT/JP2023/008595**

C. DOCUMENTS CONSIDERED TO BE RELEVANT

| Category* | Citation of document, with indication, where appropriate, of the relevant passages | Relevant to claim No. |
|---|---|---|
| X | US 2019/0285848 A1 (GENIUS ELECTRONIC OPTICAL (XIAMEN) CO., LTD.) 19 September 2019 (2019-09-19) example 3, etc. | 1-9 |

Form PCT/ISA/210 (second sheet) (January 2015)

36

**INTERNATIONAL SEARCH REPORT**
Information on patent family members

International application No.

**PCT/JP2023/008595**

| Patent document cited in search report | | | Publication date (day/month/year) | Patent family member(s) | | | Publication date (day/month/year) |
|---|---|---|---|---|---|---|---|
| US | 2015/0185439 | A1 | 02 July 2015 | CN | 103969807 | A | |
| | | | | TW | 201433815 | A | |
| US | 2015/0185438 | A1 | 02 July 2015 | CN | 103969808 | A | |
| | | | | TW | 201433817 | A | |
| US | 2015/0109686 | A1 | 23 April 2015 | EP | 2863249 | A1 | |
| | | | | TW | 201516450 | A | |
| US | 2015/0185435 | A1 | 02 July 2015 | CN | 103969809 | A | |
| | | | | TW | 201433816 | A | |
| KR | 10-2014-0003129 | A | 09 January 2014 | (Family: none) | | | |
| US | 2019/0285848 | A1 | 19 September 2019 | CN | 108459394 | A | |
| | | | | TW | 201839450 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6324824 A

- JP 6718147 A